# EUROPEAN PATENT SPECIFICATION

(11) **EP 1 347 248 B1**
(45) Date of publication and mention of the grant of the patent: **23.04.2008**
(21) Application number: 01272822.6
(22) Date of filing: 19.12.2001
(51) Int. Cl.: F24F 11/00, F25B 13/00

(54) **AIR CONDITIONER AND CONTROL METHOD FOR THE AIR CONDITIONER**
KLIMAANLAGE UND STEUERVERFAHREN DAFÜR
CLIMATISEUR ET PROCEDE DE COMMANDE DE CLIMATISEUR

(30) Priority: 26.12.2000 JP 2000396049
(43) Date of publication of application: 24.09.2003
(73) Proprietor: Toshiba Carrier Corporation, Tokyo 105-8001 (JP)
(72) Inventor: NAKANO, Hidekazu, Fuji-shi, Shizuoka 416-0909 (JP); SHIRAKAWA, Shoichiro, Shimizu-shi, Shizuoka 424-0017 (JP); SASAKI, Takumi, Fuji-shi, Shizuoka 416-0932 (JP); KUBO, Tooru, Fuji-shi, Shizuoka 416-0949 (JP)
(74) Representative: Henkel, Feiler & Hänzel
(86) International application number: PCT/JP2001/011144
(87) International publication number: WO 2002/053979

(56) References cited:
- EP-A2- 0 692 683
- GB-A- 2 249 168
- JP-A- 7 324 836
- JP-A- 8 327 122

## Description

### Technical Field

The present invention relates to a multi-type air conditioner having an outdoor unit and a plurality of indoor units and a method for controlling the same.

### Background Art

In a multi-type air conditioner (see for example patent document EP-0692683-A) having an outdoor unit including a compressor and outdoor heat exchanger and a plurality of indoor units including an indoor heat exchanger each, air conditioning loads are detected in the rooms with the respective indoor units installed and the number of rotations (operation frequency) is controlled in accordance with a total sum of these air conditioning loads. By doing so, it is possible to obtain an optimal cooling capacity or heating capacity corresponding to the total sum of the air conditioning loads.

In a refrigeration cycle of the air conditioner, an adequate amount of refrigerant is filled so that there occurs no hindrance even in the case where all the indoor units are operated simultaneously.

In the refrigeration cycle, a flow adjusting valve (electronic expansion valve) is provided for a corresponding indoor unit. The respective flow adjusting valves allow the degree of opening to be controlled so as to maintain the degree of superheat in the outdoor heat exchanger (evaporator) at a predetermined value in the refrigeration cycle.

In the case where, out of a plurality of indoor units, one indoor unit alone is operated in a heating mode, a greater amount of refrigerant flows into that indoor unit in a concentrated way. If this occurs, then superheat control acts under its set value so that the degree of opening of the flow adjusting valve corresponding to the operated indoor unit is controlled in a narrow-down direction, that is, in a direction toward decreasing a flow amount of refrigerant. At this time, the flow adjusting valve is put in the so-called excessive narrow-down state.

If the flow adjusting valve is put in such an excessive narrow-down state, there sometimes occurs an abnormal rise in a high-pressure side pressure of the refrigeration cycle. This abnormal pressure rise exerts an adverse effect on the parts of the refrigeration cycle.

Further, if the flow adjusting valve is put in the excessive narrow-down state, an amount of refrigerant flowing into the operated indoor heat exchanger (condenser) is lowered to a smaller extent than necessary. In this case, the temperature of the indoor heat exchanger varies in a lower direction into an undercooling region, sometimes lowering the temperature of blowing air into the room. The lowered temperature of the blowing air gives an unpleasant feeling to an occupant in the room.

### Disclosure of Invention

In one aspect of the present invention, an air conditioner is provided which can prevent an excessive narrow-down state from occurring in any flow adjusting valve.

### Brief Description of Drawings

FIG. 1 is a view showing a structure of a refrigeration cycle in one embodiment of the present invention;
FIG. 2 is a block diagram showing a control circuit of the present embodiment;
FIG. 3 is a flow chart for explaining the function of the present embodiment;
FIG. 4 is a flow chart continued from that of FIG. 3;
FIG. 5 is a flow chart continued from those of FIGS. 3 and 4;
FIG. 6 is a view showing control conditions based on the outlet refrigerant temperature in the present embodiment; and
FIG. 7 is a view showing a format of a data table in the present embodiment.

### Best Mode of Carrying Out the Invention

By referring to the drawings, an explanation will be made below about one embodiment of the present invention.

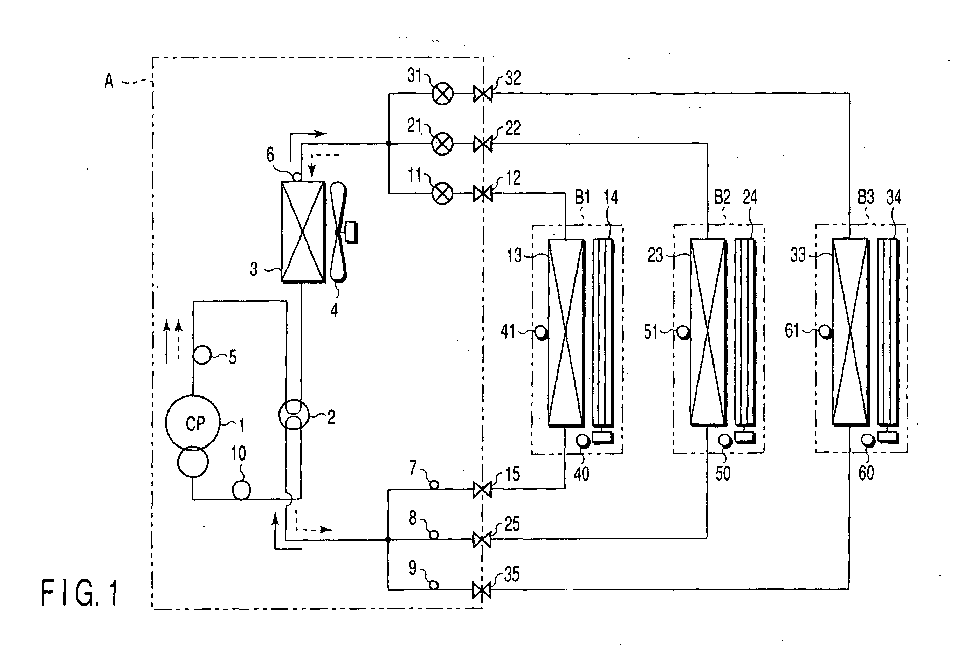

As shown in FIG. 1, a plurality of indoor units B1, B2 and B3 are pipe-connected to an outdoor unit A to provide a multi-type heat pump system refrigeration cycle.

The outdoor unit A has a compressor 1, a four-way valve 2 and an outdoor heat exchanger 3. The indoor unit B1 has an indoor heat exchanger 13. The outdoor unit B2 has an indoor heat exchanger 23. The indoor unit B3 has an indoor heat exchanger 33.

The outdoor heat exchanger 3 is connected to a discharge port of the compressor 1 via the hour-way valve 2 and a packed valve 12 is connected via a flow adjusting valve (also called as an electronic expansion valve) 11 to the outdoor heat exchanger 3. The indoor heat exchanger 13 in the indoor unit B1 is connected to the packed valve 12 and, to the indoor heat exchanger 13, a packed valve 15 is connected. The suction port of the compressor 1 is connected via the four-way valve 2 to the packed valve 15.

A packed valve 22 is connected via a flow adjusting valve 21 to the outdoor heat exchanger 3 and, to the packed valve 22, the indoor heat exchanger 23 in the indoor unit B2 is connected. A packed valve 25 is connected to the indoor heat exchanger 23 and, to the packed valve 25, the suction port of the compressor 1 is connected via the four-way valve 2.

A packed valve 32 is connected via a flow adjusting valve 31 to the outdoor heat exchanger 3 and, to the packed valve 32, an indoor heat exchanger 33 in the indoor unit B3 is connected. A packed valve 35 is connected to the indoor heat exchanger 33 and, to the packed valve 35, the suction port of the compressor 1 is connected via the four-way valve 2.

The flow adjusting valves 11, 21 and 31 each are comprised of a pulse motor valve (PMV) configured to have a degree of its opening Q, continuously varied in accordance with the number of drive voltage pulses (hereinafter indicated by pls) supplied and serves to adjust a flow level of a refrigerant through a variation in the degree of its opening.

At a time of a cooling mode, as indicated by solid line arrows in Figure, a cooling cycle is created by causing a refrigerant which is discharged from the compressor 1 to flow past the four-way valve 2, flow adjusting valve 11, 21 and 31, indoor heat exchangers 13, 23 and 33 and four-way valve 2 back to the compressor.

At a time of a heating mode, as indicated by broken line arrows in Figure, a heating cycle is created by causing the refrigerant which is discharged from the compressor 1 to flow back to the compressor 1 past the four-way valve 2, indoor heat exchangers 13, 23 and 33, flow adjusting valves 11, 21 and 31 and four-way valve 2.

An adequate amount of refrigerant is filled in this heat pump type refrigeration cycle so that no hindrance occurs, even in the case where all the indoor units B1, B2 and B3 are run simultaneously.

An outdoor fan 4 is provided near the outdoor heat exchanger 3. In the vicinity of the indoor heat exchangers 13, 23 and 33, indoor fans 14, 24 and 34 are provided, respectively.

At a high pressure-side pipe between the discharge port of the compressor 1 and the four-way valve 2, a refrigerant temperature sensor 5 is mounted to detect the temperature of a refrigerant Td discharged from the compressor 1.

At a liquid-side pipe between the outdoor heat exchanger 3 and the flow adjusting valves 11, 21 and 31, a temperature sensor 6 is mounted in a position contacting with the outdoor heat exchanger 3.

At a gas-side pipe between the packed valves 15, 25 and 35 and the four-way valve 2, sensors 7, 8 and 9 are mounted to detect a temperature Tg of the refrigerant flowing out of the indoor heat exchangers 13, 23 and 33 at a time of creating the cooling cycle and a temperature Tg flowing into the indoor heat exchangers 13, 23 and 33 at a time of creating heating cycle.

At a low pressure-side pipe between the four-way valve 2 and the suction port of the compressor 1, a refrigerant temperature sensor 10 is mounted to detect a temperature Ts of the refrigerant sucked into the compressor 1.

In the indoor unit B1, an indoor temperature sensor 40 is provided to detect a temperature in the indoor air sucked under the indoor fan 14 and a heat exchanger temperature sensor 41 is provided to detect a temperature Tc of the indoor heat exchanger 13.

In the indoor unit B2, an indoor temperature sensor 50 is provided to detect a temperature in the indoor air sucked under an indoor fan 24 and a heat exchanger temperature sensor 51 is provided to detect the temperature Tc in the indoor heat exchanger 23.

In the indoor unit B3, an indoor temperature sensor 60 is provided to detect a temperature in the indoor air sucked under an indoor fan 34 and a heat exchanger temperature sensor 61 is provided to detect the temperature Tc of the indoor heat exchanger 33.

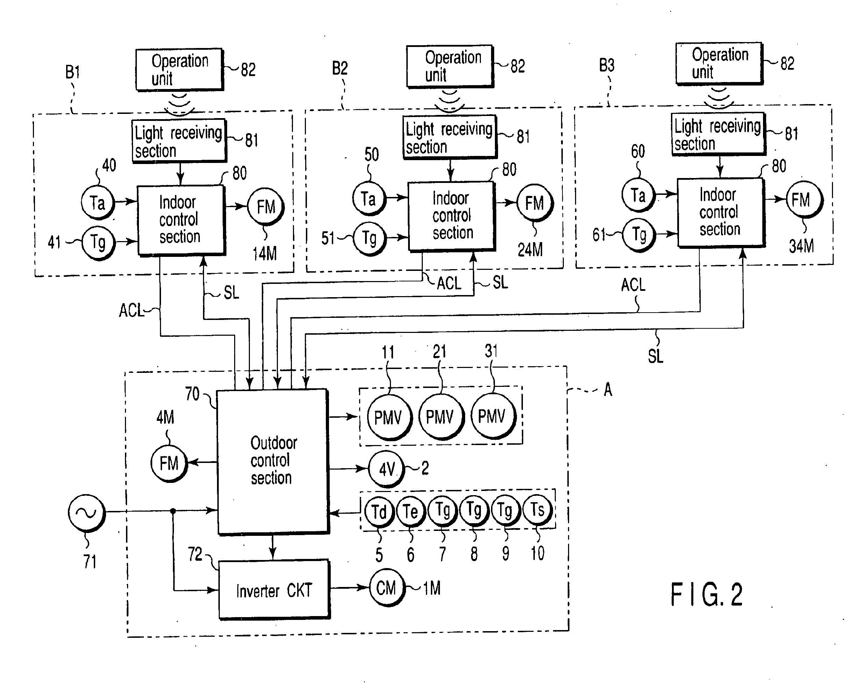

A control circuit is shown in FIG. 2.

An outdoor control section 70 in the outdoor unit A is connected to a commercial AC power source 71. To this outdoor control unit 70, the flow adjusting valves 11, 21 and 31, four-way valve 2, outdoor fan motor 4M, temperature sensors 5, 6, 7, 8, 9 and 10, and inverter 72 are connected. The inverter circuit 72 is configured to rectify a voltage of the power source 71 and convert a DC voltage which is obtained by the rectification to a voltage of a frequency (and level) corresponding to an instruction from the outdoor control section 70 and output it. This output is used as the drive power for the compressor motor 1M.

The indoor units B1, B2 and B3 have indoor control sections 80, respectively.

To the indoor control section of the indoor unit B1, the indoor temperature sensor 40, heat exchanger temperature sensor 41, indoor fan motor 14M and light receiving section 81 are connected. The light receiving section 81 receives infrared light coming from a remote control type operation unit 82.

To the indoor control section 80 of the indoor unit B2, the indoor temperature sensor 50, heat exchanger temperature sensor 51, indoor fan motor 24M and light receiving section 81 are connected. The light receiving section 81 receives infrared light coming from a remote control type operation unit 82.

To the indoor control section 80 of the indoor unit B3, the indoor temperature sensor 60, heat exchanger temperature sensor 61, indoor fan motor 34M and light receiving section 81 are connected. The light receiving section 81 receives infrared light coming from a remote control type operation unit 82.

These indoor control sections 80 and outdoor control section 70 are connected together by power source lines ACL and data transmission serial signal lines SL, respectively.

The respective indoor control section 80 has the following means [1] to [4] to achieve the main functions.
[1] Means for notifying operation conditions (cooling mode, heating mode, setting indoor temperature, etc.,) set by the operation of a remote control unit 62 to the outdoor unit A with the use of a power source voltage synchronized serial signal.
[2] Load detection means for detecting, as an air conditioning load, a difference between detection temperatures Ta of the indoor temperature sensors 40, 50 and 60 and the indoor temperature set by the operation unit 82.
[3] Means for notifying, to the outdoor unit A, a demand capacity corresponding to the air conditioning load detected by the load detecting means.
[4] Means for notifying detection temperatures Tc of the heat exchanger temperature sensors 41, 51 and 61 to the outdoor unit A.

The outdoor control section 70 has following means [11] to [18] to achieve main functions.
[11] First degree-of-superheat detection means for, at a time of a cooling mode (at a time of creating a cooling cycle), detecting a difference between a detection temperature Tg of a refrigerant temperature sensor (7, 8, 9) corresponding to a now-operated indoor unit and a detection temperature Tc of the heat exchanger temperature sensor (41, 51, 61) as the degree of superheat of the refrigerant in the indoor heat exchanger (13, 23, 33).
[12] Means for, at a time of a cooling mode (at a time of creating a cooling cycle), controlling the degree of opening Q, of the flow adjusting valve (11, 21, 31) corresponding to the now-operated indoor unit within a range of 42 (pls) to 500 (pls) so as to allow the degree of superheat which is detected by the degree-of-superheat detection means to be maintained to a predetermined set valve.
[13] Means for, at a time of a cooling mode (at a time of creating a cooling cycle), fully closing the flow adjusting valve (11, 21, 31) corresponding to a now-stopped indoor unit.
[14] Second degree-of-superheat detecting means for, at a time of a heating mode (at a time of creating a heating cycle), detecting a difference between the detection temperature Ts of the refrigerant temperature sensor 10 and the detection temperature Te of the refrigerant temperature sensor 6 as the degree of superheat of the refrigerant in the outdoor heat exchanger 3.
[15] Means (first control section) for, at a time of a heating mode (at a time of creating a heating cycle), controlling the degree of opening Q, of the flow adjusting valve (11, 21, 31) corresponding to a now-operated indoor unit within a range of 42 (pls) to 500 (pls) so as to allow the degree of superheat which is detected by the second degree-of-superheat detecting means to be maintained to a predetermined set valve.
[16] Means (third control section) for, at a time of a heating mode (at a time of creating a heating cycle), maintaining the flow adjusting valve corresponding to a now-stopped indoor unit to a predetermined set degree of opening. Although the set degree of opening is 100 (pls) as a reference, it is corrected within a range of 50 (pls) to 150 (pls) in accordance with other operation situations.
[17] Means for controlling the number of rotations, Fd (rpm), of the compressor 1 (the output frequency of the inverter circuit 72) within a range of 15 (rpm) to 90 (rpm) in accordance with a total sum of demand capacities of the indoor units B1, B2 and B3.
[18] Means (second control section) for, at a time of a heating mode (at a time of setting a heating cycle), restricting an allowable minimal opening Qmin under the degree-of-opening control by the means [15] to a higher value than normal when the detection temperature Td of the refrigerant temperature sensor 5 becomes over a set value Tds.

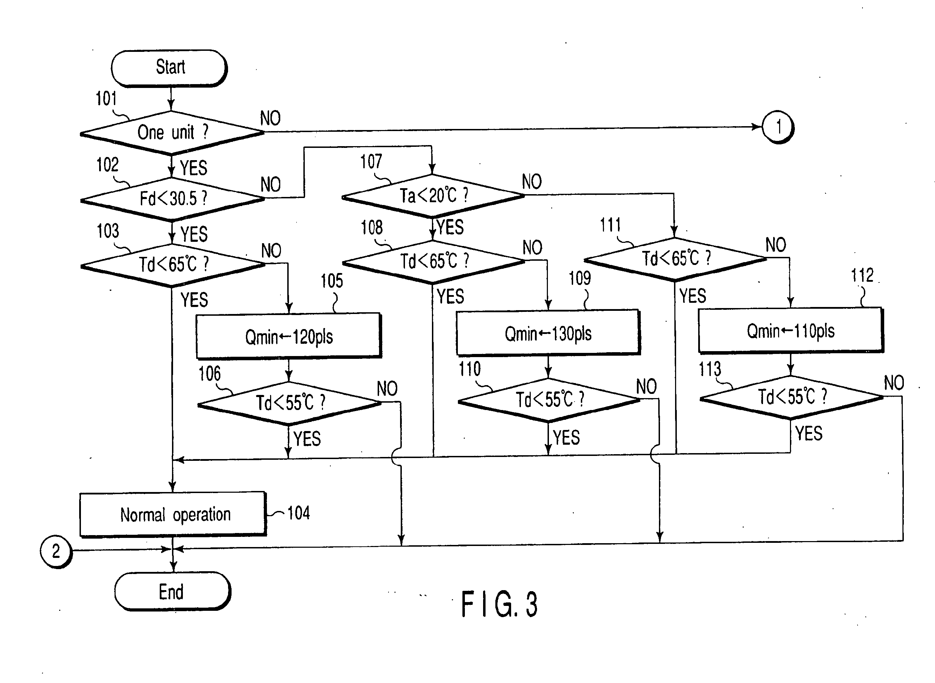

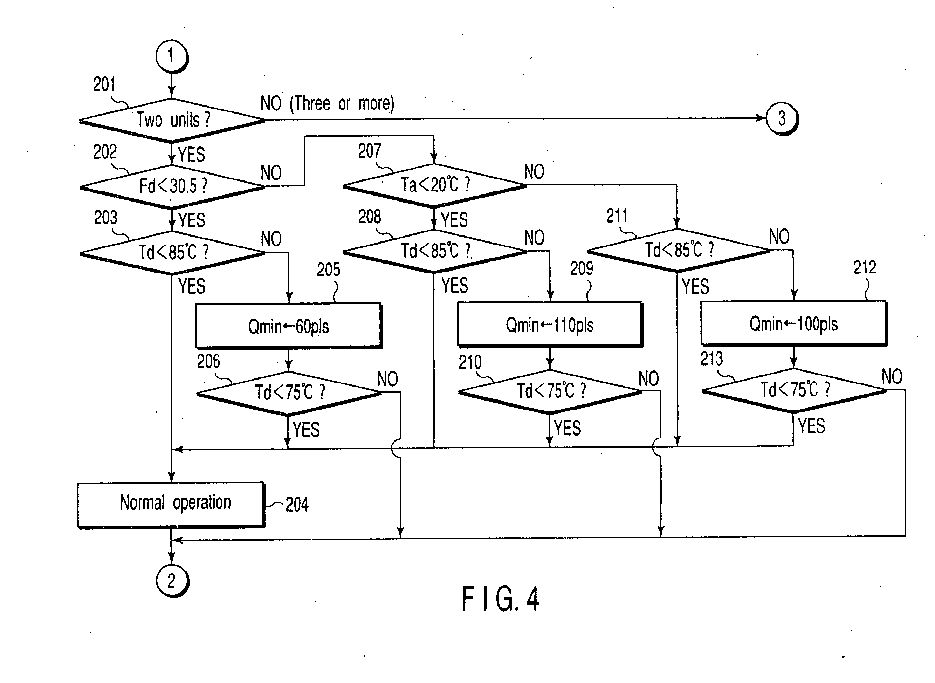

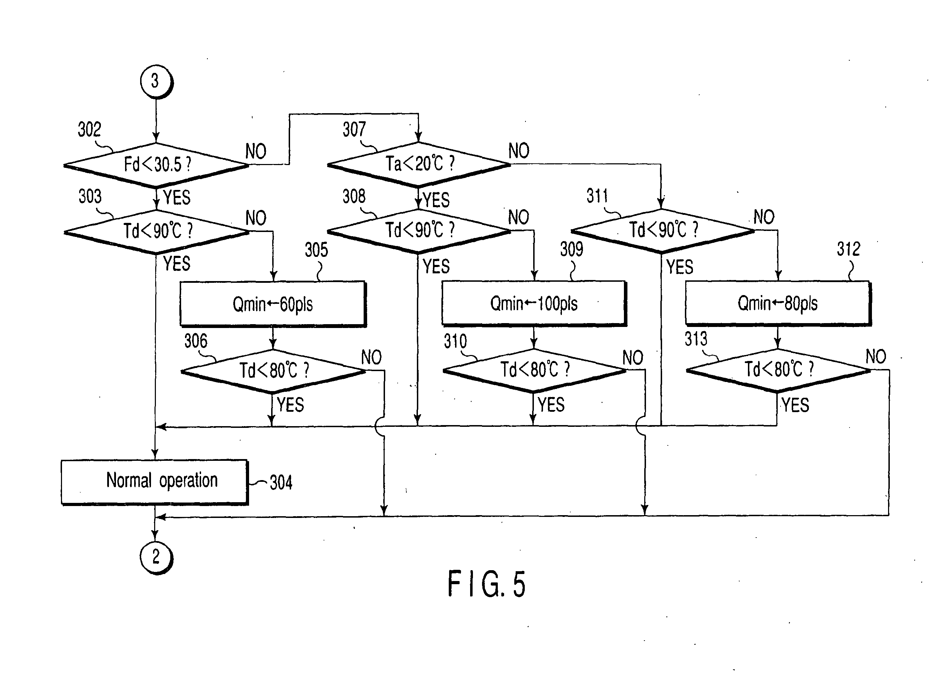

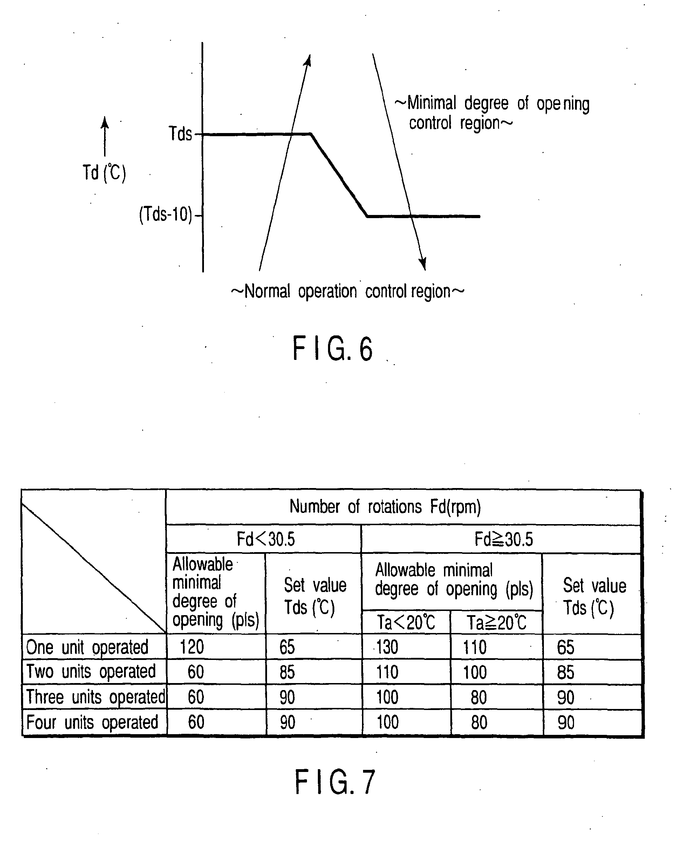

The function of the resultant structure will be explained below while referring to flow charts in FIG. 3, 4 and 5 and control condition of FIG. 6.

With the heating cycle set, the indoor heat exchangers 13, 23 and 33 serve as condensers, while the outdoor heat exchanger 3 serves as an evaporator, so that heating operation is carried out in the indoor units B1, B2 and B3.

In the case where any one of the indoor units B1, B2 and B3, for example, the indoor unit B1, is operated in a heating mode (YES is step 101), comparison is made between the number of rotations Fd (rpm) of the compressor 1 and the set value, for example, 30.5 (rpm) - step 102. When the number of rotations, Fd, is less than 30.5 (rpm) - YES in step 102, comparison is made between the outlet refrigerant temperature Td detected by the refrigerant temperature sensor 5 and a set value Tds (=65°C) - step 103. If the outlet refrigerant temperature Td is in a normal operation range less than Tds (YES in step 103), a normal operation is carried out (step 104). That is, degree-of-superheat control is carried out in which the degree of opening Q, of the flow adjusting valve 11 varies in a range of 42 (pls) to 500 (pls).

If, however, the outlet refrigerant temperature Td rises up to an allowable degree-of-opening control region higher than the set value Tds (NO in step 103), then an allowable minimal degree-of-opening Qmin under the degree-of-opening control relative to the flow adjusting valve 11 is restricted to a higher value 120 (pls) than a value 42 (pls) at a normal operation time - step 105.

After this, comparison is made between a value 55°C lower than the set value Tds by 10°C and the outlet refrigerant temperature Td (step 106). If, however, the outlet refrigerant temperature Td becomes less than 55°C (YES in step 106), the allowable minimal degree-of-opening Qmin is returned back to a normal extent of 42 (pls) and a normal operation is carried out - step 104.

In the case where the number of rotations, Fd, of the compressor 1 becomes greater than 30.5 (rpm) - NO in step 102, comparison is made between the detection temperature Ta of the indoor temperature sensor 40 in a now-operated indoor unit B1 and a set value (=20°C) - step 107.

If the indoor temperature Ta becomes less than the set value (YES in step 107), comparison is made between the outlet refrigerant temperature Td and the set value Tds (step 108). If the outlet refrigerant temperature Td is in a normal operation range less than the set value Tds (YES in step 108), a normal operation is carried out (step 104).

If, however, the outlet refrigerant temperature Td rises up to the minimal degree-of-opening control range greater than the set value Tds (NO in step 108), the allowable minimal degree-of-opening Qmin under the degree-of-opening control relative to the flow adjusting valve 11 is restricted to a higher value 130 (pls) than value 42 (pls) at the normal operation time - step 109.

If, after this, the outlet refrigerant temperature Td becomes less than 55°C (YES in step 110), the allowable minimal degree-of-opening Qmin is returned back to the normal extent of 42 (pls) and a normal operation is carried out (step 104).

If the indoor temperature Ta becomes higher than a set value (=20°C) - (NO in step 107), a normal operation is done (step 104) in the case where the outlet refrigerant temperature Td is in a normal operation range less than the set value Tds (YES in step 111). When the outlet refrigerant temperature Td rises up to a minimal degree-of-opening control region higher than the set value Tds (NO in step 111), the allowable minimal degree-of-opening Qmin under the degree-of-opening control relative to the flow adjusting valve is restricted to a higher value 110 pls than a value 42 pls at the normal operation time (step 112).

If, after this, the outlet refrigerant temperature Td becomes less than 55°C (YES in step 113), the allowable minimal degree-of-opening Qmin is returned back to a normal extent of 42 (pls) and the normal operation is carried out (step 104).

In a heating operation of two indoor units (NO in step 101, YES in step 201), processing at step 202 to 213 is carried out. The basic processing is the same as that at the operation of one indoor unit, but both are different in terms of selecting 85°C as a set value Tds relative to the outlet refrigerant temperature Td and selectively setting 60 (pls), 110 (pls) and 100 (pls) as a restriction value of the allowable minimal degree of opening, Qmin.

In a heating operation of three or more indoor units (NO in step 101, NO in step 201), processing at steps 302 to 313 is performed. The basic processing is the same as that at the operation of one indoor unit, but both are different in terms of selecting 90°C as a set value Tds relative to the outlet refrigerant temperature Td and selectively setting 60 (pls), 100 (pls) and 80 (pls) as a restriction value of the allowable minimal degree of opening, Qmin.

FIG. 7 shows a data table of a list of set values Tds and allowable minimal degree of openings Qmin, corresponding to the number of operated indoor units, number of rotations Fd, of the compressors 1 and indoor temperature Ta. The data table is stored in an internal memory 70 in the outdoor control section 70 and, by referring to this table, the set value Tds and allowable minimal degree of opening, Qmin, are selectively set.

As set out above, in the case where the outlet refrigerant temperature Td rises, the allowable degree of opening of the flow adjusting valve is restricted and, by doing so, it is possible to positively prevent any inconvenience of the flow adjusting valve being excessively narrowed down and hence to prevent any abnormal rise in a high pressure-side pressure of the refrigeration cycle. At a transient time, the condensing temperature Tc may sometimes be lowered once down to an undercooling region but the allowable minimal degree of opening functions properly and effectively and, finally, the condensing temperature Tc is shifted away from the undercooling region. Thus a lowering in an outlet air temperature is cancelled.

Even in the operation of either one, two or three indoor units, it is possible to control the flow of the refrigerant properly and secure enhanced reliability.

In the situation under which the allowable minimal degree of opening is not restricted, degree-of-superheat control functions effectively. Even in the case where more indoor units are operated or a pipe length of the refrigeration cycle is greater, it is possible to set the narrow-down extent of the respective flow adjusting valve properly and to blow warmer, comfortable air out of the indoor unit.

Various changes or modification of the present invention can be made without restricting the present invention and without departing from the scope of the present invention as defined by the appended claims.

## Claims

1. An air conditioner comprising:
an outdoor unit (A) configured to have a compressor (1), a four-way valve (2) and an outdoor heat exchanger (3), the compressor being configured to suck, compress and discharge a refrigerant;
a plurality of indoor units (B1, B2, B3) configured to have an indoor heat exchanger (13, 23, 33) each ;
a refrigerant cycle composed of a pipe connection of the compressor, four-way valve (2), outdoor heat exchanger (3) and respective indoor heat exchangers (B1, B2, B3), and capable of selectively creating a cooling cycle in which a refrigerant discharged out of the compressor is returned back to the compressor past the four-way valve, outdoor heat exchanger and respective indoor heat exchanger, and a heating cycle in which the refrigerant discharged out of the compressor is returned back to the compressor past the four-way valve, respective indoor heat exchangers and outdoor heat exchanger;
a plurality of flow adjusting valves (11,21,31) provided at the pipe connection between the outdoor heat exchanger and the respective indoor heat exchanger;
a degree-of-superheat detecting section configured to, when the heating cycle is created, detect a degree of superheat of the refrigerant in the outdoor heat exchanger;
a first control section configured to, when the heating cycle is created, control the degree of opening of the respective flow adjusting valve in accordance with the degree of superheat detected by the degree-of-superheat detecting section;
a refrigerant temperature sensor (5) configured to detect the temperature of the refrigerant discharged out of the compressor; and
second control section configured to, when the detection temperature of the refrigerant temperature sensor becomes higher than a set value at a time of creating the heating cycle, restrict an allowable minimal degree of opening under degree-of-opening control by the first control means to a higher value than normal.

2. An air conditioner according to claim 1, further comprising a third control section configured to, when the heating cycle is created, maintain the flow adjusting valve corresponding to a stopped indoor unit to a set degree of opening.

3. An air conditioner according to claim 1or 2, wherein the second control section varies a set value relative to the detection temperature detected by the refrigerant temperature sensor and restriction value relative to the allowable minimal degree of opening in accordance with the number of operated indoor units.

4. An air conditioner according to claim 1, 2 or 3, wherein the compressor is such that the number of its rotations is variable.

5. An air conditioner according to claim 4, further comprising an indoor temperature sensor provided in the respective indoor unit and configured to detect the indoor temperature; a load detecting section configured to detect an air conditioning load of the respective indoor unit on the basis of the detection temperature of the respective indoor temperature sensor; and a control section configured to control the number of rotations of the compressor.

6. An air conditioner according to claim 5, wherein said control section is configured to control the number of rotations of the compressor in accordance with the air conditioning load detected by the load detection section.

7. An air conditioner according to claim 5 or 6, wherein the second control section is configured to vary the set value relative to the detection temperature of the refrigerant temperature sensor and a restriction value relative to the allowable minimal degree of opening in accordance with the number of operated indoor units, number of rotations of the compressor and detection temperature of the respective temperature sensor.

8. A method for controlling an air conditioner comprising an outdoor unit (A) having a compressor, a fourway valve and outdoor heat exchanger, the compressor being configured to suck, compress and discharge a refrigerant, a plurality of indoor units (B1, B2, B3) having an indoor heat exchanger each, and a refrigeration cycle comprised of a pipe connection of the compressor, four-way valve, outdoor heat exchanger and respective indoor unit and capable of selectively creating a cooling cycle in which the refrigerant discharged out of the compressor is returned back to the compressor past the four-way valve, outdoor heat exchanger and respective indoor heat exchanger and a heating cycle in which the refrigerant discharged from the compressor is returned back to the compressor past the four-way valve, respective indoor heat exchanger and outdoor heat exchanger, and a plurality of flow adjusting valves (11, 21, 31) provided at a pipe connection between the outdoor heat exchanger and the respective indoor heat exchanger, the method comprising:
detecting the degree of superheat of the refrigerant in the outdoor heat exchanger, when the heating cycle is created;
controlling the degree of opening of the respective flow adjusting valve in accordance with the degree of superheat detected, when the heating cycle is created;
detecting the temperature of the refrigerant discharged out of the compressor; and
restricting an allowable minimal degree of opening under the degree-of-opening control to a value higher than normal, when the detection temperature of the refrigerant temperature sensor becomes greater than a set value at a time of creating the heating cycle.

## Patentansprüche

1. Klimaanlage mit:
einer Außeneinheit (A), die so ausgestaltet ist, dass sie einen Kompressor (1), ein Vier-Wege-Ventil (2) und einen Außen-Wärmetauscher (3) aufweist, wobei der Kompressor zum Ansaugen, Komprimieren und Austragen eines Kältemittels ausgestaltet ist,
mehreren Inneneinheiten (B1,B2,B3), die so ausgestaltet sind, dass sie jeweils einen Innen-Wärmetauscher (13,23,33) aufweisen,
einem Kältemittelkreis, der aus einer Rohrverbindung des Kompressors, des Vier-Wege-Ventils (2), des Außen-Wärmetauschers (3) und der jeweiligen Innen-Wärmetauscher (B1,B2,B3) gebildet ist und selektiv einen Kühlkreis, in dem ein Kältemittel, das aus dem Kompressor ausgetragen wird, über das Vier-Wege-Ventil, den Außen-Wärmetauscher und den jeweiligen Innen-Wärmetauscher zum Kompressor zurückgeführt wird, und einen Heizkreis, in dem das aus dem Kompressor ausgetragene Kältemittel über das Vier-Wege-Ventil, die jeweiligen Innen-Wärmetauscher und den Außen-Wärmetauscher zum Kompressor zurückgeführt wird, bilden kann
mehreren Strömungseinstellventilen (11,21,31), die an der Rohrverbindung zwischen dem Außen-Wärmetauscher und dem jeweiligen Innen-Wärmetauscher vorgesehen sind,
einem Überhitzungsgrad-Erfassungsabschnitt, der so gestaltet ist, dass er, wenn der Heizkreis gebildet wird, einen Grad einer Überhitzung des Kältemittels in dem Außen-Wärmetauscher erfasst,
einem ersten Steuerabschnitt, der so gestaltet ist, dass er, wenn der Heizkreis gebildet wird, den Öffnungsgrad des jeweiligen Strömungseinstellventils gemäß dem Grad der von dem Überhitzungsgrad-Erfassungsabschnitt erfassten Überhitzung steuert,
einem Kältemittel-Temperatursensor (5), der zur Erfassung der Temperatur des aus dem Kompressor ausgetragenen Kältemittels ausgestaltet ist, und
einem zweiten Steuerabschnitt, der so ausgestaltet ist, dass er, wenn die Erfassungstemperatur des Kältemittel-Temperatursensors höher wird als ein eingestellter Wert bei der Bildung des Heizkreises, einen zulässigen Minimal-Öffnungsgrad unter einer Öffnungsgradsteuerung durch das erste Steuermittel auf einen höheren Wert als einen Normalwert einschränkt.

2. Klimaanlage nach Anspruch 1, ferner mit einem dritten Steuerabschnitt, der so ausgestaltet ist, dass er, wenn der Heizkreis gebildet wird, das Strömungseinstellventil entsprechend einer angehaltenen Inneneinheit auf einem eingestellten Öffnungsgrad hält.

3. Klimaanlage nach Anspruch 1 oder 2, wobei der zweite Steuerabschnitt einen Einstellwert relativ zu der von dem Kältemittel-Temperatursensor erfassten Erfassungstemperatur sowie einen Einschränkungswert relativ zu dem zulässigen Minimal-Öffnungsgrad entsprechend der Anzahl von betätigten Inneneinheiten variiert.

4. Klimaanlage nach Anspruch 1, 2 oder 3, wobei der Kompressor so ausgelegt ist, dass die Anzahl seiner Umdrehungen variabel ist.

5. Klimaanlage nach Anspruch 4, ferner mit einem Innen-Temperatursensor, der in der jeweiligen Inneneinheit vorgesehen und zur Erfassung der Innentemperatur ausgestaltet ist, einem Last-Erfassungsabschnitt, der zum Erfassen einer Luftkonditionierungslast der jeweiligen Inneneinheit auf der Basis der Erfassungstemperatur des jeweiligen Innen-Temperatursensor ausgestaltet ist, und einem Steuerabschnitt, der zur Steuerung der Anzahl von Umdrehungen des Kompressors ausgestaltet ist.

6. Klimaanlage nach Anspruch 5, wobei der Steuerabschnitt zur Steuerung der Anzahl von Umdrehungen des Kompressors entsprechend der von dem Lasterfassungsabschnitt erfassten Luftkonditionierungslast ausgestaltet ist.

7. Klimaanlage nach Anspruch 5 oder 6, wobei der zweite Steuerabschnitt zum Variieren des eingestellten Werts relativ zur Erfassungstemperatur des Kältemittel-Temperatursensors und eines Einschränkungswerts relativ zu dem zulässigen Minimal-Öffnungsgrad entsprechend der Anzahl betätigter Inneneinheiten, der Anzahl von Umdrehungen des Kompressors und der Erfassungstemperatur des jeweiligen Temperatursensors ausgestaltet ist.

8. Verfahren zum Steuer einer Klimaanlage mit einer Außeneinheit (a) mit einem Kompressor, einem Vier-Wege-Ventil und einem Außen-Wärmetauscher, wobei der Kompressor zum Ansaugen, Komprimieren und Austragen eines Kältemittels ausgestaltet ist, mehreren Inneneinheiten (B1,B2,B3) mit jeweils einem Innen-Wärmetauscher, und einem Kältemittelkreis, der aus einer Rohrverbindung des Kompressors, des Vier-Wege-Ventils, des Außen-Wärmetauschers und der jeweiligen Inneneinheit gebildet ist und selektiv einen Kühlkreis, in dem das von dem Kompressor ausgetragene Kältemittel über das Vier-Wege-Ventil, den Außen-Wärmetauscher und den jeweiligen Innen-Wärmetauscher zum Kompressor zurückgeführt wird, sowie einem Heizkreis, bei dem das aus dem Kompressor ausgetragene Kältemittel über das Vier-Wege-Ventil, den jeweiligen Innen-Wärmetauscher und Außen-Wärmetauscher zu dem Kompressor zurückgeführt wird, bilden kann, sowie mehreren Strömungseinstellventilen (11,21,31), die an der Rohrverbindung zwischen dem Außen-Wärmetauscher und dem jeweiligen Innen-Wärmetauscher vorgesehen sind, wobei das Verfahren umfasst:
Erfassen des Überhitzungsgrads des Kältemittels in dem Außen-Wärmetauscher, wenn der Heizkreis gebildet wird,
Steuern des Öffnungsgrads des jeweiligen Strömungseinstellventils entsprechend dem erfassten Überhitzungsgrad, wenn der Heizkreis gebildet wird,
Erfassen der Temperatur des aus dem Kompressor ausgetragenen Kältemittels, und
Einschränken eines zulässigen Minimal-Öffnungsgrads unter der Öffnungsgradsteuerung auf einen höheren Wert als einen Normalwert, wenn die Erfassungstemperatur des Kältemittel-Temperatursensors größer wird als ein eingestellter Werte bei der Bildung des Heizzyklus.

## Revendications

1. Climatiseur comprenant :
une unité d'extérieur (A) configurée afin d'avoir un compresseur (1), une soupape à quatre voies (2) et un échangeur thermique d'extérieur (3), le compresseur étant configuré afin d'aspirer, de comprimer et d'évacuer un réfrigérant ;
une pluralité d'unités d'intérieur (B1, B2, B3) configurées afin d'avoir un échangeur thermique d'intérieur (13, 23, 33) chacune ;
un cycle de réfrigérant composé d'un raccord de tuyau du compresseur, d'une soupape à quatre voies (2), d'un échangeur thermique d'extérieur (3) et d'échangeurs thermiques d'intérieur respectifs (B1, B2, B3), et capable de créer sélectivement un cycle de refroidissement pendant lequel un réfrigérant évacué du compresseur est renvoyé vers le compresseur au-delà de la soupape à quatre voies, de l'échangeur thermique d'extérieur et de l'échangeur thermique d'intérieur respectif, et un cycle de réchauffement pendant lequel le réfrigérant évacué du compresseur est renvoyé vers le compresseur au-delà de la soupape à quatre voies, des échangeurs thermiques d'intérieur respectifs et de l'échangeur thermique d'extérieur ;
une pluralité de soupape de régulation de débit (11, 21, 31) prévues au niveau du raccord de tuyau entre l'échangeur thermique d'extérieur et l'échangeur thermique d'intérieur respectif ;
une section de détection de degré de surchauffe configurée afin de, lorsque le cycle de réchauffement est créé, détecter un degré de surchauffe du réfrigérant dans l'échangeur thermique d'extérieur ;
une première section de commande configurée afin de, lorsque le cycle de réchauffement est créé, contrôler le degré d'ouverture de la soupape de régulation de débit respective selon le degré de surchauffe détecté par la section de détection de degré de surchauffe ;
un capteur de température de réfrigérant (5) configuré afin de détecter la température du réfrigérant évacué du compresseur ; et
une seconde section de commande configurée afin de, lorsque la température de détection du capteur de température du réfrigérant devient supérieure à une valeur définie à un moment de création du cycle de réchauffement, restreindre un degré minimal autorisé d'ouverture, sous le contrôle du degré d'ouverture par le premier moyen de commande, à une valeur supérieure à la normale.

2. Climatiseur selon la revendication 1, comprenant en outre une troisième section de commande configurée afin de, lorsque le cycle de réchauffement est créé, maintenir la soupape de régulation du débit correspondant à une unité d'intérieur arrêtée à un degré d'ouverture défini.

3. Climatiseur selon la revendication 1 ou 2, dans lequel la seconde section de commande fait varier une valeur définie par rapport à la température de détection détectée par le capteur de température du réfrigérant et une valeur de restriction par rapport au degré minimal autorisé d'ouverture selon le nombre d'unités d'intérieur actives.

4. Climatiseur selon la revendication 1, 2, ou 3, dans lequel le compresseur est tel que son nombre de rotations est variable.

5. Climatiseur selon la revendication 4, comprenant en outre un capteur de température d'intérieur prévu dans l'unité d'intérieur respective et configuré afin de détecter la température intérieure ; une section de détection de charge configurée afin de détecter une charge de climatisation de l'unité d'intérieur respective sur la base de la température de détection du capteur de température intérieure respectif ; et une section de commande configurée afin de contrôler le nombre de rotations du compresseur.

6. Climatiseur selon la revendication 5, dans lequel ladite section de commande est configurée afin de contrôler le nombre de rotations du compresseur selon la charge de climatisation détectée par la section de détection de charge.

7. Climatiseur selon la revendication 5 ou 6, dans lequel la seconde section de commande est configurée afin de faire varier la valeur définie par rapport à la température de détection du capteur de température du réfrigérant et une valeur de restriction par rapport au degré minimal autorisé d'ouverture selon le nombre d'unités d'intérieur actives, le nombre de rotations du compresseur et la température de détection du capteur de température respectif.

8. Procédé de commande d'un climatiseur comprenant une unité d'extérieur (A) ayant un compresseur, une soupape à quatre voies et un échangeur thermique d'extérieur, le compresseur étant configuré afin d'aspirer, de comprimer et d'évacuer un réfrigérant, une pluralité d'unités d'intérieur (B1, B2, B3) ayant un échangeur thermique d'intérieur chacune, et un cycle de réfrigération composé d'un raccord de tuyau du compresseur, d'une soupape à quatre voies, d'un échangeur thermique d'extérieur et d'une unité d'intérieur respective et capable de créer sélectivement un cycle de refroidissement pendant lequel le réfrigérant évacué du compresseur est renvoyé vers le compresseur au-delà de la soupape à quatre voies, de l'échangeur thermique d'extérieur et de l'échangeur thermique d'intérieur respectif, et un cycle de réchauffement pendant lequel le réfrigérant évacué du compresseur est renvoyé vers le compresseur au-delà de la soupape à quatre voies, de l'échangeur thermique d'intérieur respectif et de l'échangeur thermique d'extérieur, et une pluralité de soupapes de régulation du débit (11, 21, 31) prévues au niveau d'un raccord de tuyau entre l'échangeur thermique d'extérieur et l'changeur thermique d'intérieur respectif, le procédé comprenant :
la détection du degré de surchauffe du réfrigérant dans l'échangeur thermique d'extérieur, lorsque le cycle de réchauffement est créé ;
le contrôle du degré d'ouverture de la soupape de régulation du débit respective selon le degré de surchauffe détecté, lorsque le cycle de réchauffement est créé ;
la détection de la température du réfrigérant évacué du compresseur ; et
la restriction d'un degré minimal autorisé d'ouverture sous le contrôle du degré d'ouverture à une valeur supérieure à la normale, lorsque la température de détection du capteur de température du réfrigérant devient supérieure à une valeur définie à un moment de création du cycle de réchauffement.
